# EUROPEAN PATENT APPLICATION

(11) **EP 3 915 370 A1**
(43) Date of publication of application: **01.12.2021**
(21) Application number: 21184180.4
(22) Date of filing: 07.05.2019
(51) Int. Cl.: A01N 43/40, A01N 25/02, A01P 13/00

(54) **STABLE PHYTOENE DESATURASE INHIBITOR HERBICIDE FORMULATION**

(30) Priority: 07.05.2018 AU 2018901539
(62) Divisional of application: 19728129.8
(71) Applicant: Adama Agan Ltd., 7710201 Ashdod (IL)
(72) Inventor: HORSFIELD, Andrew, Brighton, 4017 (AU); VAUGHAN, Peter, Burpengary, 4505 (AU)
(74) Representative: Modiano, Gabriella Diana

(57) **Abstract**

The present invention relates to a herbicidal formulation in the form of an emulsifiable concentrate formulation (later abbreviated as "EC formulation") for controlling grasses and weeds in crops of useful plants, which contains diflufenican and a solvent system comprising cyclohexyl acetate and a polar water-miscible co-solvent.

## Description

### RELATED APPLICATION/S

This application claims the benefit of priority of Australia Patent Application No. 2018901539 filed on 7 May 2018, the contents of which are incorporated herein by reference in their entirety.

The present invention relates to a herbicidal formulation in the form of an emulsifiable concentrate formulation (later abbreviated as "EC formulation") for controlling grasses and weeds in crops of useful plants, which contains diflufenican and a solvent system comprising cyclohexyl acetate and a polar water-miscible co-solvent.

The present invention further relates to an EC formulation comprising a mixture of diflufenican and picolinafen wherein the concentration of diflufenican is higher than 20g/L, preferably higher than 25g/L.

An emulsifiable concentrate is a solvent-based system that contains active ingredients which are usually not soluble or not stable in water. These active ingredients have a fungicide, herbicide or insecticide action and are dissolved in an organic solvent together with the emulsifiers. EC formulations are widely used because of their simple way of manufacturing. For application in the field, such formulations are diluted in water, forming an oil-in-water emulsion that allows a homogeneous distribution of active ingredients. Because EC formulations are solvent-based, the physical properties can vary widely depending on the solvent system used.

The solvent type can affect the product quality such as viscosity, stability upon storage and upon dilution and potential for phytotoxicity. Traditionally, organic solvents such as xylene and solvent naphtha are used as solvent in EC. These compounds show a high capability of dissolving a wide range of active ingredients because of the presence of aromatic groups. Alternative solvents are mineral and vegetable oils and their derivatives, especially esterified fatty acids and methylated seed oils.

The emulsifying system also influences the stability of the emulsion after addition of water and thus the performance of the pesticides on the targeted pests or weeds. Suitable emulsifiers are usually blended and not used as a single component. Such a blend can consist of two non-ionic surfactants. A mixture of a non-ionic and an anionic surfactant is used more frequently. The ratio of the two components is critical to find the most suitable HLB for the solvent. HLB or the hydrophilic-lipophilic balance system is well known to those who are skilled in the art. This scale is based on the relative percentage of lipophilic and hydrophilic surfactants.

Beside the active ingredient (s), water immiscible solvent and emulsifiers, EC formulations usually also contain other additives such as stabilizers, thickeners, antifoam or wetting agents.

Diflufenican (later abbreviated as "DFF") was first described by M. C. C. Ramp et al. (Proc. Br. Crop Prot. Conf. - Weeds, 1985, 1, 23). Diflufenican (N-(2,4-difluorophenyl)-2-[3-(trifluoromethyl)phenoxy]-3-pyridinecarboxamide) is a carotenoid biosynthesis inhibitor which acts by the inhibition of phytoene desaturase. It is a selective contact and residual herbicide, which is principally absorbed by the roots of germinating seedlings, with limited translocation. Diflufenican is used for pre- or early post-emergence in autumn-sown wheat and barley, to control grass and broad-leaved weeds. DFF is also an effective broadleaf herbicide on key weeds such as wild radish *(Raphanus raphanistrum)* when applied post-emergent in an emulsifiable concentrate formulation. Existing EC formulations on the market contain a DFF concentration of 20 g/L or less and other herbicides. There are no EC formulations on the market containing a DFF concentration higher than 20 g/L due to solubility limitations.

Even though DFF is soluble in polar protic solvents such as methanol, ethanol, acetic acid, isopropanol, n-octanol or polar aprotic solvents such as dimethylsulfoxide, N,N-dimethylformamide, N-methylpyrrolidone, EC formulations containing DFF and using polar solvents are prone to crystallization upon dilution. It has been determined that polar solvents being water-miscible migrate from the micelle (containing the solubilized DFF) formed upon emulsification with water. This leads to crystallization in the dilute aqueous spray solution which blocks spray equipment as well as gives ineffective control of important weed species.

International application WO 2013/126947 A1, assigned to Huntsman Corporation Australia, reads on an emulsifiable concentrate formulation comprising at least one agrochemical active ingredient, at least one surfactant emulsifier and a primary solvent system, wherein the solvent system comprises a combination of benzyl acetate and at least one polar, substantially water-miscible co-solvent. The ratio of benzyl acetate to water-miscible solvent lies in the range of 99.9:0.1 to 40:60.

International application WO 01/01777 A1, assigned to BASF AG, is directed to a nonaqueous emulsifiable concentrate formulation for herbicidal crop protection active compounds which consists essentially of 25 to 150 g/L of at least one fluorinated herbicidal compound, 400 to 900 g/L of one more herbicidal alkyl phenoxyalkanoate, 10 to 100g/L of at least one non-ionic surfactant, 10 to 100g/L of at least one benzene sulfonate and 50 to 600g/L of one or more solvent selected from the group consisting of aliphatic or aromatic hydrocarbons, methylated plant oils and water-miscible polar aprotic organic solvents.

International application WO 2003/024227 A1, assigned to Syngenta Participations AG, discloses herbicidal compositions comprising a mixture of at least two active ingredients and in particular emulsion concentrate formulations with calcium dodecylbenzenesulfonate and polyglycol ethers as emulsifiers and aromatic C₉-C₁₂ hydrocarbon mixture as solvent.

Accordingly, it is an object of the present invention to obtain a storage-stable EC formulation with a DFF concentration of above 20 g/L, without encountering crystallization issues upon dilution of the EC formulation.

It is also an object of the present invention to provide water-in-oil emulsions which lead to an effective control of important weed species.

It is a further object of the present invention to provide herbicidal compositions which treat a broad spectrum of weeds economically while lowering the chemical burden on the environment.

It is a further object of the present invention to provide herbicidal formulation which treat a broad spectrum of weeds economically while lowering the chemical burden on the environment.
Surprisingly, it has now been found that using cyclohexyl acetate as a solvent mixture in combination with polar water-miscible co-solvents and/or adding additional PDS inhibitor herbicide not only provides for stable EC formulations with a high loading of DFF but avoids the formation of problematic DFF crystallisation upon dilution.

According to one aspect of the present invention, there is provided an emulsifiable concentrate formulation comprising a) diflufenican, b) an emulsifying surfactant system and c) a mixture of solvents, wherein the herbicidal active ingredient is diflufenican and the solvent mixture comprises a combination of cyclohexyl acetate and at least one polar water-miscible co-solvent. The presence of the polar water-miscible co-solvent in the EC formulation according to the invention surprisingly results in a marked stabilization of the EC.

The storage-stable EC formulation according to the invention enables formulations having a DFF concentration lying in the range of from 20g/L to 50g/L, preferably from 25g/L to 45g/L, even more preferably from 25g/L to 35g/L.

The polar water-miscible co-solvent can be a protic or an aprotic solvent and is selected from the group consisting of N-methylpyrrolidone (NMP), dimethylsulfoxide (DMSO), dimethylformamid (DMF), acetonitrile, glycols, acetone, C₁-C₁₀ alcohols. Alcohols that come into consideration are for example methanol, ethanol, propanol, isobutanol, hexanol, octanol and dodecanol. The alcohols may be straight-chain or branched, for example 2-ethylhexanol and isotridecanol, being present in the form of diols or triols, for example ethylene glycol, propylene glycol, dipropylene glycol and 2-methyl-2,4- pentanediol, being present in the form of glycol monoethers such as butyl glycol and butyl diglycol, and they may also be substituted, for example with furfuryl and tetrahydrofurfuryl alcohol, benzyl alcohol, 4-hydroxy-4-methyl-2-pentanone.
In a particular embodiment, the co-solvent is a water-miscible amide solvent, including, without limitation, N-methyl pyrrolidone (NMP), N,N-dimethylformamide (DMF), N,N-dimethylacetamide, formamide, N-methylformamide, and the like. Any amide-based solvent may be useful due to their ability to provide a slight increase in pH in water. In another embodiment, other polar protic solvents may be useful, albeit, with a lesser influence on the pH. Thus, solvents such as dimethyl sulfoxide (DMSO), sulfolane, tetrahydrofuran (THF), and similar polar aprotic solvents may be useful.

Preferably, the water-miscible co-solvent is N-methyl pyrrolidone. N-methyl pyrrolidone (NMP) is a cyclic amide-based polar aprotic solvent that is substantially miscible with water in almost any ratio. When an NMP solution containing an organic compound goes into water, NMP may immediately dissolve into the water phase and the organic compound may begin to precipitate or separate into a second liquid phase.

Additionally to cyclohexyl acetate and the polar water-miscible co-solvent, other solvents, co-solvents and/or additives (in any amount) that may be present in the concentrates or formulations disclosed herein include, without limitation, 1,3-propanediol, 2-ethyl-1-, 2-ethylhexanol, 2-methyl-1,3-propanediol, 2-methyl-2,4-pentanediol, acetic anhydride, acetone, ammonium hydroxide, amyl acetate, chlorobenzene, choline chloride, cod liver oil, cyclohexane, cyclohexanone, decanamide, decenamide, diethylene glycol, diethylphthalate, diisopropyl adipate, dipropylene glycol, d-limonene, ethyl acetate, ethyl esters of fatty acids derived from edible fats and oils, glycerol mono-, di-, and triacetate, isopropyl myristate, kerosene, lactic acid, 2-ethylhexyl ester, methyl esters of fatty acids derived from edible fats and oils, methyl isobutyl ketone, mineral oils, oleyl alcohol, oxo-decyl acetate, oxo-heptyl acetate, oxo-hexyl acetate, oxo-nonyl acetate, oxo-octyl acetate, oxo-tridecyl acetate, petroleum hydrocarbons, synthetic isoparaffine, phenol, propylene glycol, propylene glycol monomethyl ether, soybean oil-derived fatty acids, tetrahydrofurfuryl alcohol, glyceryl triacetate, xylene.

In particular embodiments, solvents that may be useful in conjunction with concentrates and formulations disclosed herein include, without limitation, amyl acetate, ethyl acetate, methyl or ethyl esters of fatty acids derived from edible fats and oils, glycerol mono-, di-, and triacetate, lactic acid, 2-ethylhexyl ester.

Preferably the weight ratio of cyclohexyl acetate to polar water-miscible co-solvent lies in the range of from 30/70 to 60/40 and even more preferably in the range of from 40/60 to 50/50.

In a preferred embodiment, the EC formulation contains at least one more herbicidal compound from the group of inhibitors of phytoene desaturase (PDS inhibitor). The at least one more herbicidal compound is selected from the group consisting of beflutamid, fluridone, norflurazon, flurochloridone, picolinafen, flurtamone. Preferably the herbicidal compound is picolinafen. Due to its greater solubility in organic solvents, stable EC formulations containing picolinafen at concentrations higher than 25 g/L have been achieved. However, when targeting key weeds such as wild radish, herbicide mixtures containing DFF provide similar or better activity on emerged weeds and greater residual activity than herbicide mixtures containing picolinafen on wild radish.

In another preferred embodiment, the EC formulation further contains at least one herbicidal active ingredient from the group of inhibitors of photosynthesis electron transport and/or at least one herbicidal active ingredient selected from the group of synthetic auxins. Preferably, the herbicidal active ingredient is selected from the group consisting of bromofenoxim, ioxynil, bromoxynil, 2,4-D, 2,4-DB, dichlorprop, MCPA, MCPB, clomeprop, mecoprop. Even more preferably, the herbicidal active ingredient is bromoxynil and/or MCPA. Emulsification can be achieved using an emulsifier having crystallisation inhibitive properties such as alkylphenol ethoxylates, such as nonyl phenol ethoxylate. However, this type of emulsifier has shown to provide an ineffective control of weed species. EC formulations using a branched nonylphenol ethoxylate emulsifier are usually free from DFF crystallisation upon dilution but are less effective in field application, particularly at low application rates.

It has been found that emulsification performance providing instantaneous bloom, fine and stable micelle formation are obtained by using an emulsifying surfactant system composed of a mixture of an anionic surfactant and an alkoxylated polyarylphenol at a weight ratio of from 3:1 to 1:3, preferably of from 2:1 to 1:2. The particular combination enables an oil-in-water emulsion to be formed when the emulsifiable concentrate formulation is added to water.

Anionic surfactants suitable for use in the invention may be polyarylphenol polyalkoxyether sulfates and/or phosphates, C₈-C₂₀ alcohol polyalkoxyether phosphates, carboxylates, and/or citrates; alkyl benzenesulfonic acids; C8-20 alkyl carboxylates including fatty acids; C₈-C₂₀ alcohol sulfates; C₈-C₂₀ alcohol phosphate mono- and diesters; C₈-C₂₀ alcohol and (C₈-C₂₀ alkyl)phenol polyoxyethylene ether carboxylates, sulfates and sulfonates; C₈-C₂₀ alcohol and (C₈-C₂₀ alkyl)phenol polyoxyethylene phosphate mono- and diesters; C₈-C₂₀ alkylbenzene sulfonates, naphthalene sulfonates and formaldehyde condensates thereof; lignosulfonates; C₈-C₂₀ alkyl sulfosuccinates and sulfosuccinamates; C₈-C₂₀ acyl glutamates, sarcosinates, isethionates and taurates; water-soluble soaps and mixtures thereof.

Exemplary polyarylphenol polyalkoxyether sulfates and phosphates include polyarylphenol polyethoxyether sulfates and phosphates, polyarylphenol polypropoxyether sulfates and phosphates, polyarylphenol poly(ethoxy/propoxy)ether sulfates and phosphates, and salts thereof. The term "aryl" includes, for example, phenyl, tolyl, naphthyl, tetrahydronaphthyl, indanyl, indenyl, styryl, pyridyl, quinolinyl, and mixtures thereof. Exemplary polyarylphenol polyethoxyether sulfates and phosphates include distyrylphenol polyethoxyether sulfates and phosphates, and tristyrylphenol polyethoxyether sulfates and phosphates. The polyarylphenol polyalkoxyether sulfates and phosphates may have a degree of alkoxylation (e.g., ethoxylation) of between about 1 and about 50, preferably between about 2 and about 40, more preferably between about 5 and about 30. Commercially available polyarylphenol polyalkoxyether sulfates and phosphates include, for example, SOPROPHOR® 4 D 384 (Rhodia Corporation, Cranbury, NJ) (tristyrylphenol (EO)₁₆ sulfate ammonium salt), SOPROPHOR® 3 D 33 (Rhodia Corporation, Cranbury, NJ) (tristyrylphenol (EO)₁₆ phosphate free acid), SOPROPHOR® FLK (Rhodia Corporation, Cranbury, NJ) (tristyrylphenol (EO)₁₆ phosphate potassium salt) and SOPROPHOR® RAM 384 (Rhodia Corporation, Cranbury, NJ) (tristyrylphenol polyethoxylated ether sulfate neutralized with polyethoxylated oleylamine). In other embodiments, the polyarylphenol polyalkoxyether sulfates and phosphates may be mono-arylphenol polyalkoxyether sulfates and phosphates, such as styrylphenol polyethoxyether sulfates and phosphates.

Exemplary alkylbenzene sulfonic acids and salts thereof include dodecylbenzene sulfonic acid, and metal (for example sodium or calcium), ammonia or amine salts of the alkylbenzene sulfonic acids, including dodecylbenzene sulfonic acid. Amine neutralized versions include primary amines, diamines, triamines and alkanol amines.

Additional preferred anionic surfactants include (C₈-C₁₂ alkyl)phenol polyoxyethylene ether sulfates, and (C₈-C₁₂ alkyl)phenol polyoxyethylene phosphate mono- and diesters, accompanied in each case by monovalent counterions. In one embodiment the monovalent counterion for a (C₈-C₁₂ alkyl)phenol polyoxyethylene ether sulfate or a (C₈-C₁₂ alkyl)phenol polyoxyethylene phosphate is a protonated polyoxyethylene C₈-C₁₂ alkylamine surfactant. More specifically, polyoxyethylene tallowamine salt of a nonylphenol polyoxyethylene ether sulfate, nonylphenol polyoxyethylene phosphate, and a blend of such nonylphenol polyoxyethylene phosphate with polyoxyethylene tallowamine.

In a preferred embodiment, the emulsifying surfactant system composed of a mixture of a C₄-C₁₆ alkyl benzyl sulfonate and an alkoxylated polyarylphenol at a weight ratio of from 3:1 to 1:3, preferably of from 2:1 to 1:2. The particular combination enables an oil-in-water emulsion to be formed when the emulsifiable concentrate formulation is added to water. Preferably the benzyl sulfonate is a linear dodecylbenzene sulfonate, calcium salt 60% dissolved in 2-ethylhexanol and the alkoxylated polyarylphenol is an ethopropoxylated polyarylphenol at a weight ratio of 1:1.

It has further been found that combining DFF and another PDS inhibitor herbicide which has greater solubility e.g. picolinafen can create a more stable EC formulation with greater herbicidal activity than applying a single PDS inhibitor herbicide in an EC formulation. It also allows for a higher concentration of DFF in the formulation.

According to another aspect of the present invention, there is provided, an EC formulation comprising a mixture of DFF and another PDS inhibitor herbicide.

In some embodiments, PDS inhibitor herbicide is selected from the group consisting of beflutamid, fluridone, norflurazon, flurochloridone, picolinafen, flurtamone. Preferably the PDS inhibitor herbicide is picolinafen.

According to another embodiment, the EC formulation further comprise at least one herbicidal active ingredient from the group of inhibitors of photosynthesis electron transport and/or at least one herbicidal active ingredient selected from the group of synthetic auxins.

The herbicidal active ingredient is selected from the group of inhibitors of photosynthesis electron transport is selected from the group consisting of bromofenoxim, ioxynil, bromoxynil or an ester or salt thereof. Preferably, the inhibitor of photosynthesis electron transport is bromoxynil.

The synthetic auxin herbicide is selected from the group consisting of 2,4-D, 2,4-DB, dichlorprop, MCPA, MCPB, clomeprop, mecoprop or an ester or salt thereof. Preferably, the synthetic auxin is MCPA.

According to another aspect of the present invention, there is provided a method for increasing the solubility of DFF upon dilution comprising adding another PDS inhibitor herbicide.

The another PDS inhibitor herbicide is selected from the group consisting of beflutamid, fluridone, norflurazon, flurochloridone, picolinafen, flurtamone.
Preferably the PDS inhibitor herbicide is picolinafen.

According to another aspect of the present invention, there is provided a method for preventing re crystallization of DFF upon dilution of the EC formulation, comprising adding another PDS inhibitor herbicide.

According to another aspect of the present invention, there is provided a method for preventing re crystallization of DFF upon dilution of the EC formulation, comprising adding another PDS inhibitor herbicide into the formulation.

The another PDS inhibitor herbicide is selected from the group consisting of beflutamid, fluridone, norflurazon, flurochloridone, picolinafen, flurtamone.
Preferably the PDS inhibitor herbicide is picolinafen.

According to another aspect of the present invention, there is provided a method for increasing stability of an EC formulation comprising DFF upon dilution, the method comprising adding another PDS inhibitor herbicide and optionally at least one herbicidal active ingredient from the group of inhibitors of photosynthesis electron transport and/or at least one herbicidal active ingredient selected from the group of synthetic auxins.

The herbicidal active ingredient selected from the group of inhibitors of photosynthesis electron transport is selected from the group consisting of bromofenoxim, ioxynil, bromoxynil or an ester or salt thereof.

The herbicidal active ingredient selected from the group of synthetic auxin herbicide is selected from the group consisting of 2,4-D, 2,4-DB, dichlorprop, MCPA, MCPB, clomeprop, mecoprop or an ester or salt thereof. Preferably, the photosynthesis electron transport is Bromoxynil and the synthetic auxin is MCPA.

According to one embodiment, the EC formulation comprises DFF and another PDS inhibitor herbicide.

According to another embodiment, the EC formulation comprises DFF, another PDS inhibitor herbicide, and at least one herbicidal active ingredient from the group of inhibitors of photosynthesis electron transport.

According to another embodiment, the EC formulation comprises DFF, another PDS inhibitor herbicide, and at least one herbicidal active ingredient selected from the group of synthetic auxins.

According to another embodiment, the EC formulation comprises DFF, another PDS inhibitor herbicide, at least one herbicidal active ingredient from the group of inhibitors of photosynthesis electron transport and at least one herbicidal active ingredient selected from the group of synthetic auxins.

According to another embodiment, the EC formulation comprises at least 20 g/L DFF, at least 10 g/L another PDS inhibitor herbicide, optionally at least 200 g/L of at least one herbicidal active ingredient from the group of inhibitors of photosynthesis electron transport and/or at least 200 g/L of at least one herbicidal active ingredient selected from the group of synthetic auxins. It has also been found that a herbicidal composition comprising a) diflufenican, b) a PDS inhibitor herbicide different from diflufenican selected from the group consisting of beflutamid, fluridone, norflurazon, flurochloridone, picolinafen, flurtamone, c) one herbicidal active ingredient selected from the group of inhibitors of photosynthesis electron transport and d) one synthetic auxin herbicide showed synergistic herbicidal effects compared to the two-way or three-way mixtures.

It has also been found that a herbicidal formulation comprising a) diflufenican, b) a PDS inhibitor herbicide different from diflufenican selected from the group consisting of beflutamid, fluridone, norflurazon, flurochloridone, picolinafen, flurtamone, c) one herbicidal active ingredient selected from the group of inhibitors of photosynthesis electron transport and d) one synthetic auxin herbicide showed synergistic herbicidal effects compared to the two-way or three-way mixtures.

According to another aspect, there is provided a herbicidal formulation comprising a) diflufenican, b) a PDS inhibitor herbicide different from diflufenican, c) one herbicidal active ingredient selected from the group of inhibitors of photosynthesis electron transport and d) one synthetic auxin herbicide, wherein the formulation exhibits synergistic effects.

According to another aspect, there is provided a herbicidal formulation comprising a mixture of a) diflufenican, b) a PDS inhibitor herbicide different from diflufenican, c) one herbicidal active ingredient selected from the group of inhibitors of photosynthesis electron transport and d) one synthetic auxin herbicide, wherein the mixture exhibits synergistic effects. According to another aspect, there is provided a herbicidal mixture comprising of a) diflufenican, b) a PDS inhibitor herbicide different from diflufenican, c) one herbicidal active ingredient selected from the group of inhibitors of photosynthesis electron transport and d) one synthetic auxin herbicide, wherein the mixture exhibits synergistic effects.

In some embodiments, the mixture applied simultaneously, that is jointly or separately, or in succession, in sequence, in the case of separate application.

In some embodiments the mixture applied as tank mix.

In some embodiments, the weight ratio between DFF, the PDS inhibitor herbicide different from diflufenican, the inhibitor of photosynthesis electron transport and the synthetic auxin herbicide is 1-10:1-10:1-100:1-100, respectively. Preferably, the weight ratio between DFF, the PDS inhibitor herbicide different from diflufenican, the inhibitor of photosynthesis electron transport and the synthetic auxin herbicide is 1-5:1-5:10-100:10-100, respectively. Even more preferably, the weight ratio between DFF, the PDS inhibitor herbicide different from diflufenican, the inhibitor of photosynthesis electron transport and the synthetic auxin herbicide is 2-3:1-2: 20-50:20-50.

The herbicidal active ingredient selected from the group of inhibitors of photosynthesis electron transport is selected from the group consisting of bromofenoxim, ioxynil, bromoxynil or an ester or salt thereof, and the synthetic auxin herbicide is selected from the group consisting of 2,4-D, 2,4-DB, dichlorprop, MCPA, MCPB, clomeprop, mecoprop or an ester or salt thereof. In a preferred embodiment, the herbicidal composition comprises a) DFF, b) picolinafen, c) bromoxynil or bromoxynil octanoate and d) MCPA or MCPA 2-ethyl hexyl ester.

In another preferred embodiment, the herbicidal formulation comprises a) DFF, b) picolinafen, c) bromoxynil or bromoxynil octanoate and d) MCPA or MCPA 2-ethyl hexyl ester.

Preferably, the herbicidal composition is an emulsifiable concentrate formulation.

Preferably, the herbicidal formulation is an emulsifiable concentrate formulation. It has also been found that a herbicidal formulation comprising a) diflufenican, b) a PDS inhibitor herbicide different from diflufenican selected from the group consisting of beflutamid, fluridone, norflurazon, flurochloridone, picolinafen, flurtamone, c) one herbicidal active ingredient selected from the group of inhibitors of photosynthesis electron transport and d) one synthetic auxin herbicide showed higher weed control compared to the two-way or three-way mixtures.

Furthermore, it has also been found that a herbicidal composition comprising a) diflufenican, b) a PDS inhibitor herbicide different from diflufenican selected from the group consisting of beflutamid, fluridone, norflurazon, flurochloridone, picolinafen, flurtamone, c) one herbicidal active ingredient selected from the group of inhibitors of photosynthesis electron transport and d) one synthetic auxin herbicide showed higher weed control compared to the two-way or three-way mixtures.

According to another aspect, there is provided a herbicidal composition comprising a) diflufenican, b) a PDS inhibitor herbicide different from diflufenican selected from the group consisting of beflutamid, fluridone, norflurazon, flurochloridone, picolinafen, flurtamone, c) one herbicidal active ingredient selected from the group of inhibitors of photosynthesis electron transport and d) one synthetic auxin herbicide.

According to another aspect, there is provided a herbicidal formulation comprising a) diflufenican, b) a PDS inhibitor herbicide different from diflufenican selected from the group consisting of beflutamid, fluridone, norflurazon, flurochloridone, picolinafen, flurtamone, c) one herbicidal active ingredient selected from the group of inhibitors of photosynthesis electron transport and d) one synthetic auxin herbicide.

According to one embodiment, the herbicidal active ingredient is selected from the group of inhibitors of photosynthesis electron transport is selected from the group consisting of bromofenoxim, ioxynil, bromoxynil or an ester or salt thereof, and the synthetic auxin herbicide is selected from the group consisting of 2,4-D, 2,4-DB, dichlorprop, MCPA, MCPB, clomeprop, mecoprop or an ester or salt thereof.

In a preferred embodiment, the herbicidal composition comprises a) DFF, b) picolinafen, c) bromoxynil or bromoxynil octanoate and d) MCPA or MCPA 2-ethyl hexyl ester.

In another preferred embodiment, the herbicidal formulation comprises a) DFF, b) picolinafen, c) bromoxynil or bromoxynil octanoate and d) MCPA or MCPA 2-ethyl hexyl ester.

According to another aspect of the present invention, there is provided a composition comprising a mixture of DFF, another PDS inhibitor herbicide, and optionally at least one inhibitor of photosynthesis electron transport and/or at least one synthetic auxin which provides a faster control of weeds.

According to another aspect of the present invention, there is provided a formulation comprising a mixture of DFF, another PDS inhibitor herbicide, and optionally at least one inhibitor of photosynthesis electron transport and/or at least one synthetic auxin which provides a faster control of weeds.

According to another aspect, there is provided a herbicidal formulation comprising of a) diflufenican, b) a PDS inhibitor herbicide different from diflufenican, c) one herbicidal active ingredient selected from the group of inhibitors of photosynthesis electron transport and d) one synthetic auxin herbicide, wherein the formulation exhibits faster control of weeds.

According to another aspect, there is provided a herbicidal formulation comprising a mixture of a) diflufenican, b) a PDS inhibitor herbicide different from diflufenican, c) one herbicidal active ingredient selected from the group of inhibitors of photosynthesis electron transport and d) one synthetic auxin herbicide, wherein the mixture exhibits faster control of weeds.

According to another aspect, there is provided a herbicidal mixture comprising of a) diflufenican, b) a PDS inhibitor herbicide different from diflufenican, c) one herbicidal active ingredient selected from the group of inhibitors of photosynthesis electron transport and d) one synthetic auxin herbicide, wherein the mixture exhibits faster control of weeds

In some embodiments, the mixture applied simultaneously, that is jointly or separately, or in succession, in sequence, in the case of separate application.

In some embodiments the mixture applied as tank mix.

In some embodiments, "faster control" means at least 10%, 20%, 30%, 40%, 50%, or 60% control after one day, three days, five days, or seven days after application of any one of the formulation and/or mixture disclosed herein.

In some embodiments, the weight ratio between DFF, the PDS inhibitor herbicide different from diflufenican, the inhibitor of photosynthesis electron transport and the synthetic auxin herbicide is 1-10:1-10:1-100:1-100, respectively. Preferably, the weight ratio between DFF, the PDS inhibitor herbicide different from diflufenican, the inhibitor of photosynthesis electron transport and the synthetic auxin herbicide is 1-5:1-5:10-100:10-100, respectively. Even more preferably, the weight ratio between DFF, the PDS inhibitor herbicide different from diflufenican, the inhibitor of photosynthesis electron transport and the synthetic auxin herbicide is 2-3:1-2: 20-50:20-50.

The preparation of the EC formulations according to the invention is carried out substantially in accordance with the known customary method of dissolving the herbicidal compound or compounds in the solvent mixture comprising cyclohexyl acetate and at least one polar water-miscible co-solvent and then adding the emulsifying surfactant system. The mixture so obtained is stirred until a clear homogeneous solution has been formed.

Whereas commercial products will preferably be formulated as concentrates, the end user will normally add water to the EC formulation to obtain an oil-in-water emulsion.

The herbicidal compositions have an outstanding herbicidal activity against a broad spectrum of economically important mono- and dicotyledonous harmful plants and even on perennial weeds. The emulsion can be applied for example before sowing, pre-emergence or post-emergence. Some representatives of the dicotyledonous weed flora may be mentioned as examples that can be controlled by the herbicidal compositions according to the invention without constituting a restriction to certain species.

The herbicidal formulations have an outstanding herbicidal activity against a broad spectrum of economically important mono- and dicotyledonous harmful plants and even on perennial weeds. The emulsion can be applied for example before sowing, pre-emergence or post-emergence. Some representatives of the dicotyledonous weed flora may be mentioned as examples that can be controlled by the herbicidal formulation according to the invention without constituting a restriction to certain species.

In dicotyledonous weed species, the spectrum of activity extends to species such as Abutilon spp., Amaranthus spp., Chenopodium spp., Chrysanthemum spp., Galium spp. In dicotyledonous weed species, the spectrum of Chenopodium spp., Chrysanthemum spp., Galium spp extends to species such as Abutilon spp., Amaranthus spp., Galium aparine, Ipomoea spp., Kochia spp., Lamium spp., Matricaria spp., Pharbitis spp., Polygonum spp., Sida spp., Sinapis spp., Solanum spp., Stellaria spp., Veronica spp. such as Galium aparine, Ipomoea spp., Kochia spp., Lamium spp., Matricaria spp., Pharbitis spp., Polygonum spp., Sida spp., Sinapis spp., Solanum spp., Stellaria spp., Veronica spp., Viola spp., Xanthium spp. and Viola spp., Xanthium spp., among the annuals and Convolvulus, Cirsium, Rumex and Artemisia among the perennials.

According to another aspect of the present invention, there is provided a method for the control of undesired plant growth in crops of useful plants, which comprises applying a herbicidally effective amount of the EC formulation according to any aspect of the present invention.

According to one embodiment, the crops of useful plants are cereals.

According to another embodiment, the EC formulation is applied at the pre-sowing, pre-emergence or post-emergence stage.

According to another aspect of the present invention, there is provided the use of the herbicidal formulation and/or mixture according to any aspect of the present invention for controlling grasses and weeds in crops of useful plants.

### Examples

### Stable EC formulations with a high loading of DFF

### Formulation 1(AD-AU-1702):

| g/L | Component | IUPAC Name | Purpose in Formulation |
|---|---|---|---|
| 30 | Diflufenican TGAC 98% | 2,4-difluor-2-(α,α,α-triiluor-m-tolyloxy)nicotinanilide | Active ingredient |
| 467 | MCPA 2-Ethyl Hexyl Ester | 2-ethylhexyl-2(4-chloro-2-methylphenoxy) acetate | Active ingredient |
| 150 | N-methyl pyrrolidone | 1-methyl-2-pyrrolidone | Solvent |
| 282 | Rhodiasolv AC 6 | Cyclohexyl acetate | Solvent |
| 48 | Rhodacal 60/BE-A | Linear docecylbenzene sulfonate, calcium salt in 2-ethylhexanol solution | Anionic emulsifier |
| 32 | Soprophor TSP/724 | Ethopropoxylated polyarylphenol | Non-ionic emulsifier |

### Results of Storage Stability Testing of Sample AD-AU-1702

### Results Summary Table Time Zero (Ambient) Sample

| **Determination** | **Method** | **Acceptable Limits** | **Analysis** | **Result** |
|---|---|---|---|---|
| Appearance, Physical State & Colour | Visual | Clear brown to dark brown liquid | Clear brown liquid | PASS |
| Odour | Olfactory | Distinctive ester | Distinctive ester | PASS |
| pH 1 % v/v dilution | CIPAC MT 75.3 | 3.00 - 5.00 | 3.75 | PASS |
| Density @ 20 °C | Density Meter Anton Paar DMA 48 | 1.024 - 1.044 g/mL | 1.037 g/mL @ 20 °C | PASS |
| Emulsion Characteristics CIPAC Std Water D Ambient Temp. 23 °C | CIPAC MT 36.3 2.0 mL / 100 mL | Initial emulsification uniform | Initial emulsification uniform | PASS |
| | | 30 min < 2.0 mL cream, trace oil | 30 min < 0.05 mL cream, nil oil | |
| | | 2 h < 2.0 mL cream, trace oil | | |
| | | 24 h re-emulsification complete | 2 h < 0.00 mL cream, nil oil | |
| | | 24.5 h < 2.0 mL cream, trace oil | 24 h re-emulsification complete | |
| | | | 24.5 h < 0.05 mL cream, nil oil | |
| Persistent Foam | CIPAC MT 47.2 | max 60 mL foam | Initial 10 mL | PASS |
| CIPAC Std Water C | 4.0 mL / 200 mL | after 1 min | After 10 sec 2 mL | |
| | | | After 1 min 0 mL | |
| | | | After 3 min 0 mL | |
| | | | After 12 min 0 mL | |
| Active Ingredient | QCM-110.04 | Diflufenican 17.0 - 33.0 g/L | Diflufenican 29.3 g/L | PASS |
| Content | | MCPA 285 - 315 g/L | MCPA 287 g/L | |

### Results Summary Table Accelerated Stability Sample

| **Determination** | **Method** | **Acceptable Limits** | **Analysis** | **Result** |
|---|---|---|---|---|
| Appearance, Physical State & Colour | Visual | Clear brown to dark brown liquid | Clear brown liquid | PASS |
| Odour | Olfactory | Distinctive ester | Distinctive ester | PASS |
| pH 1 % v/v dilution | CIPAC MT 75.3 | 3.00 - 5.00 | 3.73 | PASS |
| Density @ 20 °C | Density Meter Anton Paar DMA 48 | 1.024 - 1.044 g/mL | 1.037 g/mL @ 20 °C | PASS |
| Emulsion Characteristics CIPAC Std Water D Ambient Temp. 23 °C | CIPAC MT 36.3 2.0 mL / 100 mL | Initial emulsification uniform | Initial emulsification uniform | PASS |
| | | 30 min < 2.0 mL cream, trace oil | 30 min < 0.05 mL cream, nil oil | |
| | | 2 h < 2.0 mL cream, trace oil | 2 h < 0.05 mL cream, nil oil | |
| | | 24 h re-emulsification complete | | |
| | | | 24 h re-emulsification complete | |
| | | 24.5 h < 2.0 mL cream, trace oil | | |
| | | | 24.5 h < 0.05 mL cream, nil oil | |
| Persistent Foam | CIPAC MT 47.2 | max 60 mL foam | Initial 20 mL | PASS |
| CIPAC Std Water C | 4.0 mL / 200 mL | after 1 min | After 10 sec 2 mL | |
| | | | After 1 min 0 mL | |
| | | | After 3 min 0 mL | |
| | | | After 12 min 0 mL | |
| Active Ingredient Content | QCM-110.04 | Diflufenican 17.0 - 33.0 g/L | Diflufenican 29.5 g/L | PASS |
| | | MCPA 285 - 315 g/L | MCPA 287 g/L | |

### Formulation 2 (AD-AU-1703):

| g/L | Component | IUPAC Name | Purpose in Formulation |
|---|---|---|---|
| 30 | Diflufenican TGAC 98% | 2,4-difluor-2-(α,α,α-trifluor-m-tolyloxy)nicotinanilide | Active ingredient |
| 437 | Bromoxynil Octanoate | 2,6-dibromo-4-cyanophenyl octanoate | Active ingredient |
| 150 | N-methyl pyrrolidone | 1 -methyl-2-pyrrolidone | Solvent |
| 284 | Rhodiasolv AC 6 | Cyclohexyl acetate | Solvent |
| 48 | Rhodacal 60/BE-A | Linear docecylbenzene sulfonate, calcium salt in 2-ethylhexanol solution | Anionic emulsifier |
| 32 | Soprophor TSP/724 | Ethopropoxylated polyarylphenol | Non-ionic emulsifier |
| 128 | Isooctyl acetate | Isooctyl acetate | Diluent solvent |

### Results of Storage Stability Testing of Sample AD-AU-1703

### Results Summary Table Time Zero (Ambient) Sample

| **Determination** | **Method** | **Acceptable Limits** | **Analysis** | **Result** |
|---|---|---|---|---|
| Appearance, Physical State & Colour | Visual | Clear amber to brown liquid | Clear brown liquid | PASS |
| Odour | Olfactory | Distinctive ester | Distinctive ester | PASS |
| pH 1 % v/v dilution | CIPAC MT 75.3 | 4.00 - 6.00 | 4.42 | PASS |
| Density @ 20 °C | Density Meter Anton Paar DMA 48 | 1.120 - 1.140 g/mL | 1.134 g/mL @ 20 °C | PASS |
| Emulsion Characteristics CIPAC Std Water D Ambient Temp. 23 °C | CIPAC MT 36.3 2.0 mL / 100 mL | Initial emulsification uniform | Initial emulsification uniform | PASS |
| | | | 30 min 0.25 mL cream, nil oil | |
| | | 30 min < 2.0 mL cream, trace oil | 2 h 0.40 mL cream, nil oil | |
| | | 2 h < 2.0 mL cream, trace oil | 24 h re-emulsification complete | |
| | | 24 h re-emulsification complete | 24.5 h 0.20 mL cream, nil oil | |
| | | 24.5 h < 2.0 mL cream, trace oil | | |
| Persistent Foam CIPAC Std Water C | CIPAC MT 47.2 | max 60 mL foam after 1 min | Initial 20 mL | PASS |
| | 4.0 mL / 200 mL | | After 10 sec 15 mL | |
| | | | After 1 min 7 mL | |
| | | | After 3 min 2 mL | |
| | | | After 12 min 0 mL | |
| Active Ingredient Content | QCM-110.05 | Diflufenican 27.0 - 33.0 g/L | Diflufenican 31.3 g/L | PASS |
| | | Bromoxynil 285 - 315 g/L | Bromoxynil 311 g/L | |

### Results Summary Table Accelerated Stability Sample

| **Determination** | **Method** | **Acceptable Limits** | **Analysis** | **Result** |
|---|---|---|---|---|
| Appearance, Physical State & Colour | Visual | Clear amber to brown liquid | Clear brown liquid | PASS |
| Odour | Olfactory | Distinctive ester | Distinctive ester | PASS |
| pH 1 % v/v dilution | CIPAC MT 75.3 | 4.00 - 6.00 | 4.32 | PASS |
| Density @ 20 °C | Density Meter Anton Paar DMA 48 | 1.120 - 1.140 g/mL | 1.135 g/mL @ 20 °C | PASS |
| Emulsion Characteristics CIPAC Std Water D Ambient Temp. 23 °C | CIPAC MT 36.3 2.0 mL / 100 mL | Initial emulsification uniform | Initial emulsification uniform | PASS |
| | | | 30 min 0.20 mL cream, nil oil | |
| | | 30 min < 2.0 mL cream, trace oil | 2 h 0.30 mL cream, nil oil | |
| | | 2 h < 2.0 mL cream, trace oil | 24 h re-emulsification complete | |
| | | 24 h re-emulsification complete | 24.5 h 0.30 mL cream, nil oil | |
| | | 24.5 h < 2.0 mL cream, trace oil | | |
| Persistent Foam CIPAC Std Water C | CIPAC MT 47.2 4.0 mL / 200 mL | max 60 mL foam after 1 min | Initial 20 mL | PASS |
| | | | After 10 sec 16 mL | |
| | | | After 1 min 5 mL | |
| | | | After 3 min 2 mL | |
| | | | After 12 min 0 mL | |
| Active Ingredient Content | QCM-110.05 | Diflufenican 27.0 - 33.0 g/L | Diflufenican 31.4 g/L | PASS |
| | | Bromoxynil 285 - 315 g/L | Bromoxynil 307 g/L | |

### Synergy effect between 4 compounds

### Experiment 1

The trial was located on a loamy sand site near Nanson, close to Nabawa and about 20km north of Geraldton, Western Australia. The trial was conducted in a wheat crop (Triticum aestivum cv. Hydra) sown on the 2nd June into a paddock that had been in pasture for two years.

Percent crop injury and percent weed control were rated at 3, 7, 14, 28 and 44 days after application (DA-A). A weed count was conducted at the final assessment that was inclusive of surviving and recovering plants (original green tissue and new growth) and subsequent germinators (younger plants usually showing no herbicidal injury). An attempt to distinguish between the two was not made due to the sporadic spread of the germinators.

### Product Information

| **Product** | **Active ingredient** | **Active ingredient rate (g/L or kg)** | **Form type** |
|---|---|---|---|
| Velocity | bromoxynil, pyrasulfotole, mefenpyr-diethyl | 256.9 | EC |
| Hasten | esterified vegetable oil, NIS | 900 | EC |
| LVE MCPA 570 | MCPA ester | 570 | EC |
| Talinor | bicyclopyrone, bromoxynil, cloquintocet-mexyl | 221.9 | EC |
| Adigor | methyl ester of canola fatty acids | 440 | EC |
| Flight EC | picolinafen, bromoxynil, MCPA | 595 | EC |
| Triathlon | diflufenican, MCPA, bromoxynil | 425 | EC |
| AD-AU-1603 | diflufenican, picolinafen, bromoxynil, MCPA | 520 | EC |
| AD-AU-1701 | diflufenican, picolinafen, bromoxynil, MCPA | 520 | EC |

Wild radish (Raphanus raphanistrum) control at 3, 7, 14, 28 and 44 DA-A and counts per m2 at 44 DA-A

| | | | | | | | | | | | | | | | |
|---|---|---|---|---|---|---|---|---|---|---|---|---|---|---|---|
| Rating Date | | | | | 21-Jul-2017 | | 25-Jul-2017 | | 1-Aug-2017 | | 15-Aug-2017 | | 31-Aug-2017 | | |
| Rating Type Rating Unit | | | | | CONTROL % | | | | | | | | | COUNT m2 | |
| Pest Stage Majority | | | | | 14 | | 15 | | 18 | | 25 | | 55 | | |
| Trt-Eval Interval | | | | | 3 DA-A | | 7 DA-A | | 14 DA-A | | 28 DA-A | | 44 DA-A | | |
| ARM Action Code | | | | | | | | | | | | | | AL | |

| Trt No. | Treatment Name | | | Rate Unit | | | | | | | | | | | |
|---|---|---|---|---|---|---|---|---|---|---|---|---|---|---|---|
| | | | Rate | | | | | | | | | | | | |
| 1 | Untreated | | | | 0 | d | 0 | c | 0 | d | 0 | b | 0 d | 14 | a |
| 2 | Velocity | | 670 | ml/ha | 43 | bc | 87 | a | 93 | ab | 98 | a | 98 ab | 0 | bc |
| | Hasten | | 1000 | ml/100 l | | | | | | | | | | | |
| | LVE | MCPA | | | | | | | | | | | | | |
| | 570 | | 350 | ml/ha | | | | | | | | | | | |
| 3 | Talinor | | 1200 | ml/ha | 50 | abc | 87 | a | 93 | ab | 98 | a | 98 ab | 0 | bc |
| | Adigor | | 500 | ml/100 l | | | | | | | | | | | |
| 4 | Flight | | 360 | ml/ha | 37 | c | 80 | ab | 90 | bc | 98 | a | 98 ab | 0 | bc |
| 5 | Flight | 720 | ml/ha | 50 | abc | 90 | a | 95 | a | 99 | a | 99 | a | 0 | bc |
| 6 | Triathlon | 500 | ml/ha | 43 | bc | 73 | b | 87 | c | 96 | a | 95 | c | 1 | bc |
| 7 | Triathlon | 750 | ml/ha | 50 | abc | 75 | b | 90 | bc | 98 | a | 99 | a | 0 | bc |
| 8 | Triathlon | 1000 | ml/ha | 50 | abc | 80 | ab | 93 | ab | 99 | a | 99 | a | 0 | bc |
| 9 | AD-AU-1603 | 600 | ml/ha | 53 | ab | 83 | ab | 92 | ab | 98 | a | 98 | ab | 0 | bc |
| 10 | AD-AU-1603 | 800 | ml/ha | 57 | ab | 87 | a | 93 | ab | 98 | a | 98 | ab | 0 | bc |
| 11 | AD-AU-1603 | 1000 | ml/ha | 57 | ab | 80 | ab | 92 | ab | 99 | a | 99 | a | 0 | bc |
| 12 | AD-AU-1603 | 1200 | ml/ha | 53 | ab | 83 | ab | 93 | ab | 98 | a | 98 | ab | 0 | bc |
| 13 | AD-AU-1701 | 600 | ml/ha | 50 | abc | 87 | a | 95 | a | 99 | a | 99 | a | 0 | bc |
| 14 | AD-AU-1701 | 800 | ml/ha | 57 | ab | 90 | a | 95 | a | 99 | a | 99 | a | 0 | c |
| 15 | AD-AU-1701 | 1000 | ml/ha | 57 | ab | 87 | a | 93 | ab | 98 | a | 98 | ab | 1 | bc |
| 16 | AD-AU-1701 | 1200 | ml/ha | 60 | a | 87 | a | 93 | ab | 99 | a | 99 | a | 0 | c |

**Experiment 2**

### Formulation AD-AU-1603

| g/L | Component | Purpose in Formulation |
|---|---|---|
| 20 | Diflufenican TGAC 98% | Active ingredient |
| 10 | Picolinafen TGAC 95% | Active ingredient |
| 350 | Bromoxynil Octanoate | Active ingredient |
| 390 | MCPA 2-Ethyl Hexyl Ester | Active ingredient |
| 150 | N-methyl pyrrolidone | Protic Solvent |
| 122 | Cyclohexyl acetate | Aprotic Solvent |
| 80 | Igepal 220 | Emulsifier/Crystal upon dilution inhibitor |

### Formulation AD-AU-1701:

| Content g/L | Component | IUPAC Name | Purpose in formulation |
|---|---|---|---|
| 20.41 | Diflufenican Technical 98% | 2,4-difluor-2-(α,α,α-trifluor-m-tolyloxy)nicotinanilide | active ingredient |
| 10.53 | Picolinafen Technical 95% | N-(4-fluorophenyl)-6-[3-(trifluoromethyl)phenoxy] pyridine-2-carboxamide | active ingredient |
| 367.68 | Bromoxynil Octanoate TGAC 95% | 2,6-dibromo-4-cyanophenyl octanoate | active ingredient |
| 410.09 | MCPA 2-Ethyl Hexyl Ester TGAC 95% | 2-ethylhexyl-2(4-chloro-2-methylphenoxy) acetate | active ingredient |
| 150 | NMP | 1-methyl-2-pyrrolidone | Protic solvent |
| 116.48 | Rhodiasolv AC 6 | Cyclohexyl acetate | Aprotic solvent |
| 40 | Rhodacal 60/BE-A | Linear docecylbenzene sulfonate, calcium salt in 2-ethylhexanol solution | Anionic emulsifier |
| 40 | Soprophor TSP/724 | Ethopropoxylated polyarylphenol | Non ionic emulsifier |
| 0.03 | Gensil 2000 | Polydimethylsiloxane | Antifoaming agent |

The efficacy of various herbicide combinations was compared. Herbicides were applied to wheat, barley and two wild radish biotypes, susceptible and multiple resistant (R and S). Complete cereal safety was observed with all products. Both Formulations AD-AU-1603 and AD-AU-1701 produced the greatest control of S wild radish at the two highest rates.

Standard DFF and picolinafen products included in the field trial summaries below:
- Flight - picolinafen 35 g/L + MCPA 350 g/L + bromoxynil 210 g/L EC
- Triathlon - diflufenican 25 g/L + MCPA 250 g/L + bromoxynil 150 g/L EC
- Legacy MA - diflufenican 25 g/L + MCPA 250 g/L EC
- Colt - diflufenican 25 g/L + bromoxynil 250 g/L EC
- Eliminar C - picolinafen 25 g/L + bromoxynil 250 g/L EC

Even at lower application rates, esp. 208g/L compared to 250g/L and 417 g/L compared to 500g/L, the four-way EC formulations (AD-AU-1603 and AD-AU-1701) show a better control of S and R biotypes of wild radish compared to the two- or three-way EC formulations.

### Experimental Design:

Study Design: Complete Randomised Block
Replications: 3
Plot length: 10 x 12 cm pots (0.9L)

### Site Details

Location: Adelaide, Waite Campus
Soil Description: Cocoa peat potting mix produced by mixing 540L of cocoa peat, 220L of water and 60L of sand prior to steaming for 1 hour.

### Experimental Application Method for Post Emergence Treatments

| | |
|---|---|
| Crop and Weed Growth Stage at Application | 3-4 leaf stage |
| Crops | Wheat (Mace), Barley (Compass) |
| Target weeds | Wild radish (Raphanus raphanistrum) Herbicide susceptible |
| | Group FBI resistant (herbicide survival= 10% Group F, 30% Group I and 80% Group B) |
| Crop Sowing Density | 6 seeds per pot |
| Weed Sowing Density | 6 seedlings transplanted per pot |
| Date Sprayed | 4 April 2017 |
| Spray Time | 9am |
| Growth stage at spraying | Z12-FMZ1315 (cereals and wild radish) |
| Temperature | 11°C |
| Irrigation | Watered as required |
| Application equipment | Spray Chamber |
| Speed | 4 km/hr |
| Pressure | 2.5 bar |
| Spray Volume | 110 L/ha |
| Nozzles | Tee-Jett 110-01 |
| Number of Nozzles | 2 |
| Spacing | 50 cm |
| Propellant | Compressed Air |

### Assessment Data Scoring Systems

### Percent Control of wild radish

Survival was calculated by dividing the number of plants in the untreated check with the plants surviving. Percent control was calculated by subtracting percent survival from 100. Plants were scored as surviving by the presence of new shoots. A score of 0% indicates all plants surviving (no control) and a score of 100% indicates complete control.

### Data Analysis

Means were calculated with standard error of the means showing variation in response.
a) Herbicide damage of wheat and barley. Slight bleaching was observed at the higher rates of all herbicides but no cereal mortality was observed.
b) Control (%) of susceptible (S) and multi-R wild radish (R) 30 DAA. SE represents the standard error of the means.

| **Nr** | **Treatment** | **Product rate (ml/ha)** | **R (Mean)** | **R (SE)** | **S (Mean)** | **S (SE)** |
|---|---|---|---|---|---|---|
| 1 | Untreated | - | 0 | 0 | 0 | 0 |
| 2 | Colt | 63 | 17 | 0 | 6 | 5.6 |
| 3 | Colt | 125 | 11 | 5.6 | 28 | 5.6 |
| 4 | Colt | 250 | 78 | 5.6 | 67 | 16.7 |
| 5 | Colt | 500 | 89 | 5.6 | 89 | 5.6 |
| 6 | Legacy MA | 63 | 11 | 5.6 | 39 | 11.1 |
| 7 | Legacy MA | 125 | 50 | 9.6 | 50 | 9.6 |
| 8 | Legacy MA | 250 | 44 | 5.6 | 61 | 14.7 |
| 9 | Legacy MA | 500 | 56 | 5.6 | 94 | 5.6 |
| 10 | Eliminar C | 63 | 6 | 5.6 | 11 | 5.6 |
| 11 | Eliminar C | 125 | 50 | 9.6 | 22 | 11.1 |
| 12 | Eliminar C | 250 | 78 | 5.6 | 83 | 9.6 |
| 13 | Eliminar C | 500 | 89 | 5.6 | 100 | 0.0 |
| 14 | Paragon | 31 | 17 | 0.0 | 6 | 5.6 |
| 15 | Paragon | 63 | 11 | 5.6 | 50 | 0.0 |
| 16 | Paragon | 125 | 17 | 9.6 | 67 | 0.0 |
| 17 | Paragon | 250 | 72 | 5.6 | 100 | 0.0 |
| 18 | Triathlon | 63 | 33 | 9.6 | 22 | 11.1 |
| 19 | Triathlon | 125 | 17 | 9.6 | 72 | 5.6 |
| 20 | Triathlon | 250 | 50 | 9.6 | 78 | 5.6 |
| 21 | Triathlon | 500 | 89 | 11.1 | 94 | 5.6 |
| 22 | Flight | 45 | 6 | 5.6 | 17 | 16.7 |
| 23 | Flight | 90 | 22 | 5.6 | 50 | 0.0 |
| 24 | Flight | 180 | 72 | 5.6 | 72 | 5.6 |
| 25 | Flight | 360 | 72 | 5.6 | 100 | 0.0 |
| 26 | AD-AU-1603 | 52 | 28 | 14.7 | 50 | 9.6 |
| 27 | AD-AU-1603 | 104 | 11 | 5.6 | 61 | 11.1 |
| 28 | AD-AU-1603 | 208 | 44 | 11.1 | 100 | 0.0 |
| 29 | AD-AU-1603 | 417 | 100 | 0.0 | 94 | 5.6 |
| 30 | AD-AU-1701 | 52 | 28 | 5.6 | 44 | 5.6 |
| 31 | AD-AU-1701 | 104 | 33 | 9.6 | 56 | 5.6 |
| 32 | AD-AU-1701 | 208 | 89 | 5.6 | 94 | 5.6 |
| 33 | AD-AU-1701 | 417 | 94 | 5.6 | 100 | 0.0 |

### Discussion

A pot trial was conducted to investigate combinations of Group F (picolinafen/ diflufenican herbicide components) with MCPA and bromoxynil in wheat, barley and wild radish (susceptible [S] and multiple resistant [R]). The trial was conducted outdoors in April-May 2017 under natural autumn growing conditions.

### Weed Efficacy:

Wild Radish: The resistant biotype used in this trial exhibited low Group F and I resistance therefore differences in response at lower rates were mostly similar between the S and R biotypes.

The herbicides exhibiting the greatest resistance defined as having the biggest difference between the S and R biotypes were Paragon and Flight. Without a bromoxynil component, Paragon and Legacy MA were the least effective on the R biotype. This difference in response indicates the importance of bromoxynil in resistance situations.

There were only slight differences between AD-AU-1603 and AD-AU-1701 with control greater at the higher rates by AD-AU-1701. Both products gave the greatest control of S wild radish at the two highest rates. The efficacy of AD-AU-1603 and AD-AU-1701 on R and S wild radish was better than the other products tested over the whole range of tested rates.

### Experiment 3

A plot trial was conducted in Cunderdin, Western Australia, to evaluate the efficacy of Quadrant for the control of wild radish *(Raphanus raphanistrum)* in wheat *(Triticum aestivum* cv. Magenta).

Quadrant was applied at four increasing rates of 600, 800, 1000 and 1200 ml/ha and was compared to a number of registered commercial standards:

| **Product** | **Active ingredient** | **Active ingredient concentration (g/L)** | **Form type** |
|---|---|---|---|
| Velocity | Bromoxynil | 210 | EC |
| | Pyrasulfotole | 37.5 | |
| | Mefenpyr-diethyl | 9.4 | |
| Hasten | Ethyl and Methyl esters of fatty acids Non-ionic surfactants | 704 | EC |
| | | 196 | |
| LVE MCPA 570 | MCPA | 570 | EC |
| Talinor | Bicyclopyrone | 37.5 | EC |
| | Bromoxynil | 175 | |
| | Cloquintocet-mexyl | 9.4 | |
| Adigor | Methyl esters of canola fatty acids | 440 | EC |
| Flight | Picolinafen | 35 | EC |
| | Bromoxynil | 210 | |
| | MCPA | 350 | |
| Triathlon | Diflufenican | 25 | EC |
| | MCPA | 250 | |
| | Bromoxynil | 150 | |
| Quadrant | Diflufenican | 20 | EC |
| | Picolinafen | 10 | |
| | Bromoxynil | 240 | |
| | MCPA | 250 | |

### Results

### Wild radish (Raphanus raphanistrum) control: biomass reduction at 7, 14, 25 and 42 DA-A

| | | | | | | | | | | | | | |
|---|---|---|---|---|---|---|---|---|---|---|---|---|---|
| Rating Type | | | | | | Wild radish biomass reduction % relative to untreated control | | | | | | | |
| Rating Unit | | | | | | | | | | | | | |
| Pest Stage Majority | | | | | | 18 | | 31 | | 51 | | 31 | |
| Pest Stage Minimum/Maximum | | | | | | 14 | 20 | 14 | 50 | 14 | 61 | 11 | 71 |
| Trt-Eval Interval | | | | | | 7 DA-A | | 14 DA-A | | 25 DA-A | | 42 DA-A | |
| ARM Action Codes | | | | | | | | | | | | | AA |

| Trt No. | Treatment Name | Rate | Rate Unit | Other Rate | Other Rate Unit | | | | | | | | |
|---|---|---|---|---|---|---|---|---|---|---|---|---|---|
| 1 | Untreated Control | | | | | 0.0d | | 0.0d | | 0.0f | | 0.0e | |
| 2 | Velocity | 670 | ml/ha | 172g | ai/ha | 16.7c | | 60.0b | | 50.0cd | | 95.0ab | |
| | Hasten | 1 l | l/100 l | 900g | ai/ha | | | | | | | | |
| | LVE MCPA 570 | 350 | ml/ha | 200g | ai/ha | | | | | | | | |
| 3 | Talinor | 750 | ml/ha | 166g | ai/ha | 30.0abc | | 50.0b | | 33.3de | | 46.7c | |
| | Adigor | 500 | ml/100 l | 220g | ai/ha | | | | | | | | |
| 4 | Flight | 720 | ml/ha | 430g | ai/ha | 30.0abc | | 66.7ab | | 80.0ab | | 93.3ab | |
| 5 | Triathlon | 750 | ml/ha | 320g | ai/ha | 13.3cd | | 60.0b | | 70.0abc | | 92.7ab | |
| 6 | Triathlon | 1000 | ml/ha | 425g | ai/ha | 30.0abc | | 56.7b | | 63.3bc | | 93.3ab | |
| 7 | Quadrant | 600 | ml/ha | 312g | ai/ha | 26.7bc | | 53.3b | | 60.0bc | | 83.3b | |
| 8 | Quadrant | 800 | ml/ha | 416g | ai/ha | 36.7ab | | 53.3b | | 70.0abc | | 95.0ab | |
| 9 | Quadrant | 1000 | ml/ha | 520g | ai/ha | 46.7a | | 56.7b | | 76.7ab | | 97.7a | |
| 10 | Quadrant | 1200 | ml/ha | 624g | ai/ha | 46.7a | | 80.0a | | 92.7a | | 99.3a | |
| LSD P=.05 | | | | | | | 15.73 | | 16.34 | | 22.58 | | NA |
| Standard Deviation | | | | | | | 9.34 | | 9.70 | | 13.40 | | 8.19t |
| CV | | | | | | | 30.35 | | 20.66 | | 27.1 | | 13.9t |
| Bartlett's X2 | | | | | | | 7.00 | | 10.269 | | 6.177 | | 12.258 |
| P(Bartlett's X2) | | | | | | | 0.799 | | 0.506 | | 0.722 | | 0.199 |
| Skewness | | | | | | | -0.0923 | | -0.4022 | | -0.024 | | -0.9822* |
| Kurtosis | | | | | | | -0.9873 | | -0.43 | | -1.3249 | | -0.2243 |
| | | | | | | | | | | | | | |
| Replicate F | | | | | | | 9.794 | | 2.536 | | 5.570 | | 0.689 |
| Replicate Prob(F) | | | | | | | 0.0008 | | 0.1002 | | 0.0103 | | 0.5119 |
| Treatment F | | | | | | | 6.765 | | 15.509 | | 15.169 | | 30.687 |
| Treatment Prob(F) | | | | | | | 0.0001 | | 0.0001 | | 0.0001 | | 0.0001 |

### Discussion

The results show that combination of four active ingredients (Quadrant) have a higher activity against Wild radish after 7 days in different rates of application.

Comparing quadrant with triathlon at similar rates, after 7 DAA, quadrant gave superior efficacy, which is advantages at the field of herbicides since it provides for an increased yield of the crop having less vegetation competing.

In addition, any priority document(s) of this application is/are hereby incorporated herein by reference in its/their entirety.

The present invention is further defined by the following items:
1. An emulsifiable concentrate (EC) formulation comprising a) diflufenican, b) an emulsifying surfactant system and c) a mixture of solvents, wherein the solvent mixture comprises a combination of cyclohexyl acetate and at least one polar water-miscible co-solvent.
2. The EC formulation according to item 1, wherein the polar water-miscible co-solvent is selected from the group consisting of N-methylpyrrolidone (NMP), dimethylsulfoxide (DMSO), dimethylformamid (DMF), acetonitrile, C1-C10 alcohols, glycols, acetone.
3. The EC formulation according to item 1 or 2, wherein the weight ratio of cyclohexyl acetate to polar water-miscible co-solvent lies in the range of from 30/70 to 60/40.
4. The EC formulation according to any one of items 1 to 3, wherein the EC formulation further contains at least one more herbicidal compound selected from the group consisting of beflutamid, fluridone, norflurazon, flurochloridone, picolinafen, flurtamone.
5. The EC formulation according to item 4, wherein the concentration of diflufenican in the EC formulation is higher than 20g/L.
6. The EC formulation according to any one of items 1 to 5, wherein the EC formulation contains at least one more herbicidal active ingredient selected from the group of inhibitors of photosynthesis electron transport and/or at least one herbicidal active ingredient selected from the group of synthetic auxins.
7. The EC formulation according to any one of items 1 to 6, wherein the emulsifying surfactant system is a mixture of a C4-C16 alkyl benzyl sulfonate and an alkoxylated polyarylphenol at a weight ratio of from 2:1 to 1:2.
8. The EC formulation according to item 7 wherein the benzyl sulfonate is calcium dodecyl benzene sulfonate and the alkoxylated polyarylphenol is ethopropoxylated polyarylphenol.
9. A method of controlling undesired plant growth in crops of useful plants, which comprises applying a herbicidally effective amount of an EC formulation according to any one of items 1 to 8 to act on the crop plant or the locus thereof.
10. The method according to item 9, wherein the crops of useful plants are cereals.
11. The method according to item 9, wherein the EC formulation is applied at the pre-sowing, pre-emergence or post-emergence stage.
12. A herbicidal formulation comprising a) diflufenican, b) a PDS inhibitor herbicide different from diflufenican, c) one herbicidal active ingredient selected from the group of inhibitors of photosynthesis electron transport and d) one synthetic auxin herbicide, wherein the formulation exhibits synergistic effects.
13. The herbicidal formulation of item 12, wherein the PDS inhibitor herbicide different from diflufenican is selected from the group consisting of beflutamid, fluridone, norflurazon, flurochloridone, picolinafen, flurtamone, the inhibitors of photosynthesis electron transport is selected from the group consisting of bromofenoxim, ioxynil, bromoxynil, and the synthetic auxin herbicide is selected from the group consisting of 2,4-D, 2,4-DB, dichlorprop, MCPA, MCPB, clomeprop, mecoprop or an ester or salt thereof.
14. The herbicidal formulation of item 12 or 13, wherein the PDS inhibitor herbicide is picolinafen, the inhibitor of photosynthesis electron transport is bromoxynil or an ester or salt thereof and the synthetic auxin herbicide is MCPA or an ester or salt thereof.
15. The herbicidal formulation of any one of items 12 to 14 wherein the formulation is an emulsifiable concentrate formulation.
16. Use of the herbicidal formulation of any one of items 12 to 15 for controlling grasses and weeds in crops of useful plants.

## Claims

1. A herbicidal formulation comprising a) diflufenican, b) a PDS inhibitor herbicide different from diflufenican, c) one herbicidal active ingredient selected from the group of inhibitors of photosynthesis electron transport and d) one synthetic auxin herbicide, wherein the formulation exhibits synergistic effects.

2. The herbicidal formulation of claim 1, wherein the PDS inhibitor herbicide different from diflufenican is selected from the group consisting of beflutamid, fluridone, norflurazon, flurochloridone, picolinafen, flurtamone, the inhibitors of photosynthesis electron transport is selected from the group consisting of bromofenoxim, ioxynil, bromoxynil, and the synthetic auxin herbicide is selected from the group consisting of 2,4-D, 2,4-DB, dichlorprop, MCPA, MCPB, clomeprop, mecoprop or an ester or salt thereof.

3. The herbicidal formulation of claim 1 or 2, wherein the PDS inhibitor herbicide is picolinafen, the inhibitor of photosynthesis electron transport is bromoxynil or an ester or salt thereof and the synthetic auxin herbicide is MCPA or an ester or salt thereof.

4. The herbicidal formulation of any one of claims 1 to 3 wherein the formulation is an emulsifiable concentrate formulation.

5. Use of the herbicidal formulation of any one of claims 1 to 4 for controlling grasses and weeds in crops of useful plants.
